# EUROPEAN PATENT SPECIFICATION

(11) **EP 1 934 149 B1**
(45) Date of publication and mention of the grant of the patent: **12.10.2011**
(21) Application number: 06813784.3
(22) Date of filing: 25.08.2006
(51) Int. Cl.: C03B 17/06, C03B 18/22

(54) **METHODS OF FABRICATING FLAT GLASS WITH LOW LEVELS OF WARP**
VERFAHREN ZUR HERSTELLUNG VON FLACHGLAS MIT GERINGEM VERZUG
PROCÉDÉS DE FABRICATION DE VERRE PLAT AVEC DES NIVEAUX FAIBLES DE DÉFORMATION

(30) Priority: 22.09.2005 US 233565
(43) Date of publication of application: 25.06.2008
(73) Proprietor: Corning Incorporated, Corning NY 14831 (US)
(72) Inventor: BLEVINS, John, D., Taichung City 40361 (TW); NOVAK, Robert, A., Lexington, KY 40513 (US); SHAY, Clinton G., Moneta VA 24121 (US)
(74) Representative: Anderson, James Edward George
(86) International application number: PCT/US2006/033296
(87) International publication number: WO 2007/037871

(56) References cited:
- JP-A- 5 124 826
- US-B1- 6 758 064

## Description

### I. FIELD OF THE INVENTION

This invention relates to the manufacture of glass sheets such as the glass sheets used as substrates in display devices such as liquid crystal displays (LCDs). More particularly, the invention relates to methods for reducing a problem known as "S-warp," which occurs in the manufacture of such glass sheets by, for example, the fusion downdraw process.

### II. BACKGROUND OF THE INVENTION

### A. DISPLAY DEVICES

Display devices are used in a variety of applications. For example, thin film transistor liquid crystal displays (TFT-LCDs) are used in notebook computers, flat panel desktop monitors, LCD televisions, and Internet and communication devices, to name only a few. Some display devices such as TFT-LCD panels and organic light-emitting diode (OLED) panels are made directly on flat glass sheets. With many display devices, the glass used in the panels must be flat to within approximately 150 and approximately 250 micrometers over the surface of the glass. Any warping or ripple in the glass will have deleterious effects on the display quality.

For purposes of illustration, in many display devices, such as those referenced above, it is useful to incorporate electronic components onto a glass sheet (glass substrate) used in the display device. Often, the electronic components are complementary metal oxide semiconductor (CMOS) devices including TFT's. In these applications, it is beneficial to form the semiconductor structure directly on the glass material of the display.

Thus, many liquid crystal displays often comprise a layer of liquid crystal (LC) material associated with a glass substrate upon which transistors have been formed. The transistors are arranged in a patterned array and are driven by peripheral circuitry to provide (switch on) desired voltages to orient the molecules of the LC material in the desired manner. The transistors are essential components of the picture elements. (pixels) of the display.

As can be readily appreciated, any variation in the flatness of the glass panel may result in a variation of the spacing of the transistors and the pixels. This can result in distortion in the display panel. As such, in LCD and other glass display applications, it is exceedingly beneficial to provide glass substrates that are within acceptable tolerances for flatness to avoid at least the problems of warped glass discussed above.

### B. S-WARP

Warp is a glass sheet defect characterized by deviation from a plane. It has been one of the most troublesome and persistent problems in the manufacture of LCD glass substrates. Various types of warp are known, the present invention being concerned with S-warp.

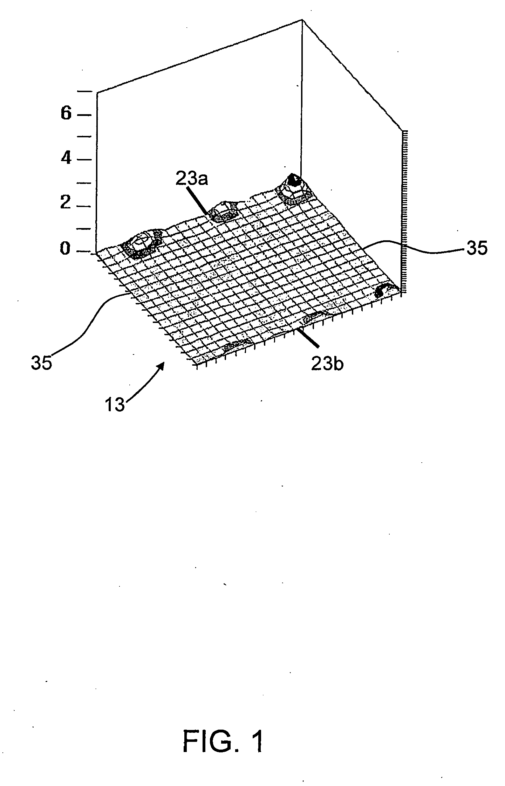

As illustrated in Figure 1, S-warp is characterized by a sine wave like out-of-plane distortion of the glass sheet that occurs on one or both of the edges (23a, 23b) of the sheet that were parallel to the "continuous edges" of the glass ribbon during the forming process. The "continuous edges" are the edges of the ribbon that are parallel to the direction of motion of the glass in the forming process. For example, in a fusion downdraw process, the orientation of these edges is vertical, while in a float process, the orientation is horizontal.

Typically, the amplitude of the out-of-plane deviations associated with S-warp is on the order of, for example, 0.1 to 2 millimeters, peak-to-valley, and the period of the deviations is on the order of 200 to 700 millimeters. Other amplitudes and periods may occur with particular glass manufacturing processes and equipment, and the present invention is also applicable in such cases.

As will be understood by persons skilled in the art, the level of S-warp which can be accepted in the final glass sheet will depend on the intended application for the sheet. As general guidelines, the level of peak-to-valley S-warp along the length of the sheet is preferably less than 1000 microns, more preferably less than 600 microns, and most preferably around 200 microns or less, e.g., the sheets can have a nominal level of S-warp of less than 250 microns.

Prior to the present invention, there has been no fundamental understanding of the origin of S-warp, and thus no systematic approach for reducing/controlling it. What is needed therefore is a method of forming substantially flat glass that overcomes at least these drawbacks in the art.

### C. PROIR ART

JP-A-5124826 discloses a method according to the preamble of claim 1 herein. US-A-6758064 describes the manufacture of a glass sheet using the downdraw method. Strain caused by differences in the temperature of the glass sheet resulting from cooling are reduced.

### III. SUMMARY OF THE INVENTION

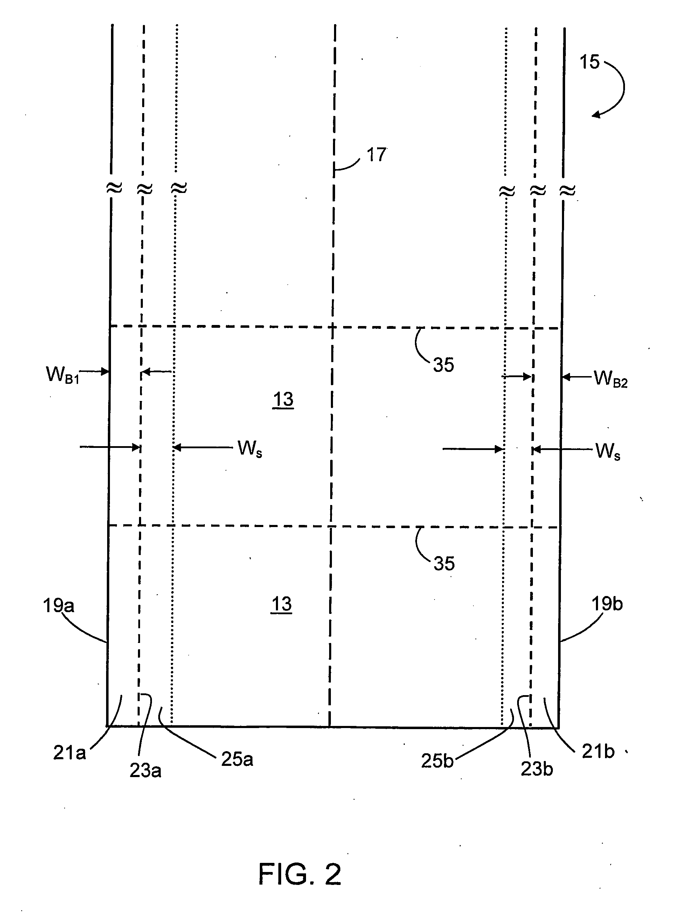

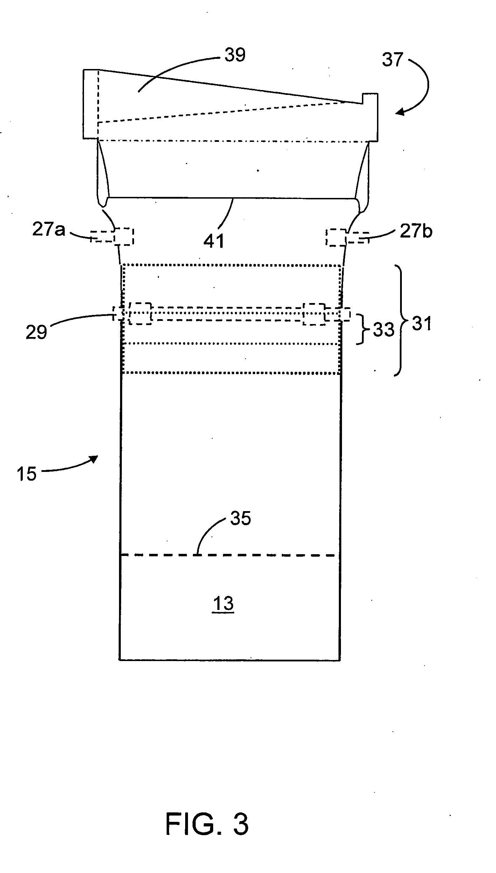

The present invention provides a method for fabricating sheets of glass (e.g., glass substrates for use in manufacturing flat panel displays) comprising:
(A) producing a glass ribbon (see, for example, reference number 15 in Figures 2 and 3) using a drawing process, said ribbon having:
   (i) a center line (17),
   (ii) a first edge (19a),
   (iii) a second edge (19b),
   (iv) a first bead portion (21a) which begins at the first edge (19a) and extends inward towards the center line (17), said first bead portion having an inner edge (23a) and a width W_{B1},
   (v) a second bead portion (21b) which begins at the second edge (19b) and extends inward towards the center line (17), said second bead portion having an inner edge (23b) and a width W_{B2},
   (vi) a first S-warp portion (25a) which begins at the inner edge (23a) of the first bead portion (21a) and extends inward towards the center line (17); and
   (vii) a second S-warp portion (25b) which begins at the inner edge (23b) of the second bead portion (21b) and extends inward towards the center line (17), said first and second S-warp portions each having a width Wₛ which equals (W_{B1} + W_{B2})/2;
(B) cutting sheets (13) from the glass ribbon (15); and
(C) trimming the first and second bead portions (21a, 21b) from the sheets (13);
   wherein:
   (i) the glass has a glass transition temperature range (GTTR) in which the glass undergoes a transformation from substantially a visco-elastic material to substantially an elastic material;
   (ii) in step (A), the ribbon (15) is cooled from a temperature above the GTTR to a temperature below the GTTR;
   (iii) at a location where the center line (17) of the ribbon (15) is at a temperature above the GTTR, the first and second bead portions (2 1 a, 21b) of the ribbon (15) are contacted by first and second edge rollers (27a, 27b), respectively;
   (iv) the contacting of the edge rollers (27a, 27b) with the ribbon (15) locally reduces the temperature of the glass (for example, the edge rollers can be air or water cooled so that their steady state temperature is below that of the ribbon); and
   (v) at at least one location where the center line of the ribbon is at a temperature that is within the GTTR (e.g., a location within region 31 in Figure 3), the first and second bead portions (21a, 21b) and/or the first and second S-warp portions (25a, 25b) of the ribbon (15) are heated, and/or the center portion of the ribbon is cooled, to reduce the temperature differences across the widths Wₛ of the S-warp portions, and thereby reduce the occurrence of S-warp in the sheets.

In certain preferred embodiments, the heating and/or cooling is performed so that the temperature differences across the widths of the S-warp portions is less than 40°C, more preferably less than 30°C, and most preferably less than or equal to 20°C.

In other preferred embodiments, the GTTR has a lower temperature portion and the at least one location where the heating and/or cooling is performed includes a location within the lower temperature portion (e.g., a location within region 33 in Figure 3).

In still further preferred embodiments, the temperature differences across the widths of the S-warp portions are primarily reduced by heating the first and second bead portions (21a, 21 b) and the first and second S-warp portions (25a, 25b), e.g., with heater windings.

For ease of presentation, the present invention is described and claimed in terms of the production of glass sheets. It is to be understood that throughout the specification and claims, the word "glass" is intended to cover both glass and glass-ceramic materials.

The reference numbers from Figures 1-4 used in the above summary of the invention are only for the convenience of the reader and are not intended to and should not be interpreted as limiting the scope of the invention. More generally, it is to be understood that both the foregoing general description and the following detailed description are merely exemplary of the invention and are intended to provide an overview or framework for understanding the nature and character of the invention.

Additional features and advantages of the invention are set forth in the detailed description which follows, and in part will be readily apparent to those skilled in the art from that description or recognized by practicing the invention as described herein. The accompanying drawings are included to provide a further understanding of the invention, and are incorporated in and constitute a part of this specification.

### IV. BRIEF DESCRIPTION OF THE DRAWINGS

Figure 1 is a schematic diagram illustrating S-warp. The vertical scale in this drawing is in millimeters and the largest warp level (maximum bow) shown in the figure is 0.5 millimeters.
Figure 2 is a schematic diagram illustrating a glass ribbon formed by a drawing process from which individual sheets of glass are cut. The locations of the bead and S-warp portions of the ribbon relative to the ribbon's center line and edges are illustrated in this figure.
Figure 3 is a schematic view of a fusion glass fabrication apparatus in accordance with an example embodiment of the invention. The locations of the edge rollers (27a, 27b), the GTTR (31), and the lower temperature portion of the GTTR (33) are schematically illustrated on this figure.
Figure 4 is a plot illustrating a representative temperature profile which can be used to reduce or eliminate S-warp in accordance with the invention.

The reference numbers used in the figures correspond to the following:
- 13: glass sheet (glass substrate)
- 15: glass ribbon
- 17: center line of ribbon
- 19a,b: edges of ribbon
- 21 a,b: bead portions of ribbon
- 23a,b: inner edges of bead portions
- 25a,b: S-warp portions of ribbon
- 27a,b: edge rollers
- 29: pulling rolls
- 31: region of ribbon corresponding to the GTTR
- 33: lower temperature portion of the GTTR
- 35: score line
- 37: isopipe, i.e., forming structure used in a downdraw fusion process
- 39: cavity in isopipe for receiving molten glass
- 41: root of isopipe

### V. DETAILED DESCRIPTION OF THE INVENTION AND ITS PREFERRED EMBODIMENTS

Glass substrates used in the manufacture of display panels, e.g., liquid crystal display panels, have the common characteristic of being thin, e.g., the substrate thickness is at most 1.1 millimeters, more typically, about 0.7 millimeters, and in the future, may be even thinner. Because of this thinness, substrates can relieve stress by buckling, and they do so both in their finished state and while they are being manufactured.

If a finished substrate is placed in a gravity-free or substantially gravity-free environment (e.g., in a fluid having the same density as the glass), the substrate will have essentially no long range, in-plane stresses. Rather, through buckling, the substrate will adopt a non-flat shape in which long range, in-plane stresses are relieved. If taken out of that environment and placed on a flat surface, the shape will change through the action of gravity, and some stress will develop in the glass, again as a result of the action of gravity. Thus, a buckled, substantially stress-free finished substrate in a gravity-free or substantially gravity-free environment will become a buckled, stress-containing substrate on a flat surface as a result of gravity, but the buckling will be different from that in the gravity-free or substantially gravity-free state.

For a typical substrate for use in manufacturing flat panel displays, the long range stresses that can be relieved by buckling are those having a spatial period greater than about 30 millimeters. Some short range stresses, e.g., stresses over in-plane distances of about 10 millimeters or less, may not be relieved, but over longer in-plane distances, the buckling mechanism will operate to substantially remove in-plane stress.

It should be noted that in the general case, in-plane stresses in a substrate have a two dimensional distribution. Such a distribution can be analyzed in terms of spatial components. Those components which have relatively low spatial frequencies (relatively long spatial periods) can be relieved by buckling, while those which have relatively high spatial frequencies (relatively short spatial periods) generally cannot. As discussed above, for typical substrates for flat panel displays, the transition between long spatial periods where buckling is effective to relieve stress and short spatial periods where buckling may not be effective, is generally in the 10-30 millimeter range.

Glass substrates for use in display applications are produced commercially by continuous manufacturing processes, such as, the downdraw, updraw, and float processes, each of which produces a ribbon of glass from which individual substrates are cut. Such continuous manufacturing processes involve the melting and refining of raw materials to produce molten glass which is then formed into the ribbon by suitable forming equipment, e.g., an "isopipe" in the case of a downdraw process of the overflow type.

Once formed, the ribbon is cooled, which causes the glass making up the ribbon to undergo a transformation from a visco-elastic material (i.e., a material in a glassy/semi-liquid state) in which stresses are rapidly relieved to a thin elastic material which can support tension stresses, but responds to compression stresses by buckling. Although the transformation from a visco-elastic material to an elastic material is a complex phenomenon, as a first approximation, the transformation can be considered to occur in a particular zone along the length of the ribbon (the transformation zone). The transformation zone lies in that portion of the ribbon where the glass is passing through its glass transition temperature range (GTTR). More particularly, the zone will typically lie near the lower temperature end of the GTTR. To a first approximation, the ribbon is substantially stress free in the transformation zone because it is, or has just been, a visco-elastic material where stresses are rapidly relieved.

Thus, in overview, manufacturing processes for producing glass substrates which employ continuous glass ribbons can be viewed as progressing from one substantially long range, stress-free state (that of the transformation zone) to another substantially long range, stress-free state (that of the cut substrate at room temperature), with the substantially long range, stress-free state at room temperature being a consequence of the thinness of the glass which allows stress to be relieved by buckling.

As discussed above, the present invention is concerned with a particular example of the type of buckling that can result from the cooling that takes place between the GTTR and room temperature, namely, S-warp. This type of buckling can be a problem in various continuous ribbon forming processes, such as, the fusion process or the float process. To successfully make low stress and/or low warp products, S-warp needs to be reduced to low levels or eliminated.

S-warp can be readily detected with the use of a high intensity point source lamp, such as a xenon lamp. In this technique, a glass sheet is positioned with the sheet held vertically and with the edge being inspected for S-warp at the top. The light from the lamp is reflected off of the face of the sheet at a shallow angle. This generates a reflected image of the sheet that can be viewed on a screen positioned opposite the lamp. The peak-to-valley of the S-warp is greatly magnified in the projected image.

S-warp can also be seen using a full sheet warp measure. In this technique, a sheet is set down horizontally onto a flat table and a device that measures the elevation of the sheet from the flat table is used to take readings over the surface of the sheet. Figure 1 plots representative full sheet warp data of a glass sheet which has S-warp.

In accordance with the invention, the source of S-warp has been discovered and methods have been developed for effectively reducing or eliminating this defect in glass substrates. Specifically, it has been determined that the cause of S-warp is excessively large temperature differences across the S-warp portions of the ribbon as the ribbon passes through the GTTR.

The origin of S-warp can be understood by reference to Figure 3 which illustrates the application of the invention to a glass drawing process of the fusion downdraw type. As shown in Figure 3, typical fusion apparatus includes a forming structure (isopipe) 37, which receives molten glass (not shown) in a cavity 39. The root of the isopipe is shown at 41, and the ribbon of glass 15, after leaving the root, traverses edge rollers 27a, 27b. The root 41 of the isopipe 37 refers to the location where molten glass from both outer sides of isopipe 37 join together. As fusion apparatus is known in the art, details are omitted so as to not obscure the description of the example embodiments. It is noted, however, that other types of glass fabrication apparatus (e.g., float apparatus) may be used in conjunction with the invention. Such apparatus is within the purview of the artisan of ordinary skill in glass manufacture.

In a fusion or other type of glass manufacturing apparatus, as a glass sheet (glass ribbon) travels down the drawing portion of the apparatus, the sheet experiences intricate structural changes, not only in physical dimensions but also on a molecular level. The change from a supple approximately 50 millimeter thick liquid form at, for example, the root of an isopipe to a stiff glass sheet of approximately a half millimeter of thickness is achieved by a carefully chosen temperature field that balances delicately the mechanical and chemical requirements to complete the transformation from a liquid to a solid state. Less than perfect temperature gradients cause sheet deviations from a plane, specifically, S-warp.

Illustratively, the glass of the example embodiments is flat glass having a thickness on the order of approximately 0.1 to 2.0 mm. The glass beneficially has a flatness along the length of the substrate on the order of approximately 150 microns to approximately 250 microns, depending on the size of the substrate. The glass may be used in glass displays such as those referenced above, or in other applications where a flat, substantially ripple-free glass surface is beneficial. As representative examples, the glass may be Corning Incorporated's Code 1737 or Code Eagle 2000 glass, or glasses for display applications produced by other manufacturers.

As discussed above and as illustrated in Figure 3, edge rollers 27a, 27b contact glass ribbon 15 at a location above that corresponding to the glass' GTTR (i.e., at a location above region 31 in Figure 3). The temperature of the edge rollers is below that of the ribbon, e.g., the edge rollers are water or air cooled. As a result of this lower temperature; the edge rollers locally reduce the temperature of the glass ribbon. This cooling serves the important function of reducing the attenuation of the ribbon, i.e., the local cooling helps control the reduction in the ribbon's width that occurs during drawing (e.g., through the action of pulling rolls 29 in Figure 3). Accordingly, at least some local cooling near the edges of the ribbon is required to economically produce glass sheets, especially, wide glass sheets.

However, in accordance with the present invention, it has been determined that this local cooling of the glass ribbon can result in S-warp in sheets of glass cut from the glass ribbon. Specifically, for glass sheet that is currently typical for LCD display applications (e.g., Corning Incorporated's Code Eagle 2000 glass), through experimental study, it has been determined that S-warp will result from cooler temperatures near the ribbon's edges versus the ribbon's center.

A further understanding of the physics behind the creation of S-warp can be understood through the following thought experiment.

Consider three strips of thin glass sheet (say 0.7 mm thick) that, at room temperature (RT), are 1 meter in length: a center strip that is 0.8 meters wide and two edge strips that are each 0.1 meters wide. The strips are all flat and stress free. Now, if one of these strips is heated, it will increase in length in accordance with its coefficient of thermal expansion (let this be 3.33 ppm/°C). For example, if the center strip is heated from RT to RT+30°C, the strip will increase in length to 1.000100 meters.

Next, consider physically trimming the width and length of this strip to bring it back to its original dimensions of 0.8 meters x 1.0 meters. Next, imagine attaching the two end strips to the trimmed center strip to make a 1 meter wide sheet. At this point the pieced together sheet is stress free and flat. Now, consider cooling the center strip back to RT. Because it is attached to the end strips, it cannot freely contract. Instead it will develop in-plane tensile stress and balancing compressive stresses will be developed in the end strips.

If enough stress is generated, and given the presence of small temporary perturbations that can flex the sheet slightly out of plane (e.g., sound waves), the sheet and, in particular, the end strips which are under compressive stress, will buckle to relieve stress. The buckling pattern that this thought experiment generates has the same general shape as that seen when a glass substrate has S-warp (see Figure 1).

Looked at another way, at room temperature, the edge strips are longer than the center because they started out cooler and therefore contracted less. But the center strip and the edges are attached together, so the edge strips need to adopt a buckled (S-shape) in order to have this longer length.

Now take this back to the case of the sheet forming process. In the ribbon forming process, through the critical temperature range, i.e., the GTTR and, in particular, the lower temperature portion of the GTTR, let the edge strips be 30°C colder that the center region and let the sheet be flat. This condition will, in essence, produce sheets that have a "frozen-in" 30 degree temperature difference. As long as the 30°C gradient is maintained, the sheets will remain flat. When these sheets are eventually brought to a uniform temperature, e.g., room temperature, S-warp will develop just as in the case of the thought experiment.

In reality the physics are more complex. The coefficient of thermal expansion of the glass sheet varies with temperature. In fact it is 2x to 3x higher in some parts of the GTTR versus at room temperature. So a 30°C temperature difference in the GTTR will not match 1:1 with the thought experiment. Also, the sheet is not necessarily flat in the forming process. This shape can add to and interact with the S-warp. Also differential structural relaxation in the glass can occur if through the GTTR the cooling rates across the sheet differ, which can impact glass properties, as well as stress and shape.

Despite the added complexities with the additional physics mentioned above, experimentation has shown that S-warp responds in a manner that is consistent with the model described in the above thought experiment. Moreover, S-warp can be effectively controlled using this model as a guideline.

One of the methods for control of S-warp is to measure the across-the-ribbon sheet temperature in the critical temperature range and then adjust heating and cooling to insure that in the critical range the glass sheet edges are not greatly cooler than the center (40°C cool edges can be sufficient to cause S-warp in Code Eagle 2000 glass that is 7 mm thick, 1.5 meters in width, and 1.5 meters in length).

A second method is to measure S-warp in the product and then, when S-warp is present, adjust heating and cooling in the process in such a way as to make the edges hotter and/or the center cooler. This second method can be practiced without making temperature measurements on the ribbon, if desired. For example, one can iteratively adjust the heating and cooling, in a manner that one would anticipate to give hotter edges and/or cooler center in the critical temperature range, and with each iteration measure the S-warp in the product. The iteration process is complete when it is seen that the S-warp is sufficiently reduced or eliminated. Preferably, the first and second methods for reducing or eliminating S-warp are used in combination.

The temperature profile in the glass' GTTR can be adjusted using various heating/cooling devices to enable cooling at a rate that is slower/faster than that realized using unaided radiation of heat and convection. Heating/cooling devices within the purview of those skilled in the art of glass sheet manufacture may be used to realize the desired thermal profile.

As general guidelines for reducing S-warp, the critical temperature range is the GTTR and, in particular, the lower temperature portion of the GTTR. As representative values for LCD glasses, specifically, Corning Incorporated's Code Eagle 2000 LCD glass, the upper end of the GTTR is typically less than or equal to about 850°C and the lower end of the GTTR is typically greater than or equal to about 650°C, e.g., the lower end of the GTTR can be greater than or equal to about 700°C. As for the lower temperature portion of the GTTR, its upper end is typically less than or equal to about 780°C and its lower end is greater than or equal to about 720°C, e.g., the lower end of the lower temperature portion of the GTTR can be greater than or equal to about 760°C.

Without intending to limit it in any manner, the present invention will be more fully described by the following example.

### Example

### S-Warp Reduction

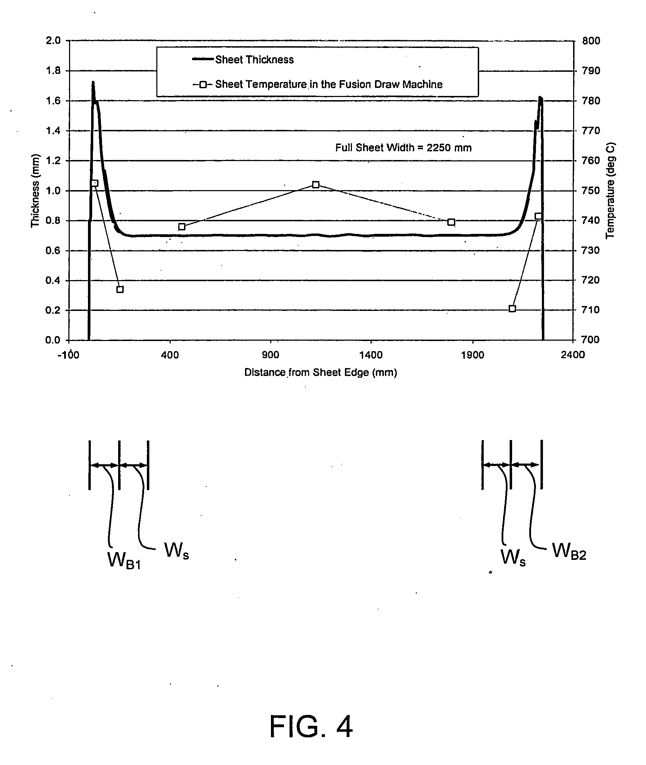

Figure 4 shows a temperature profile in the glass transition temperature range (GTTR) for Corning Incorporated's Code Eagle 2000 glass that has been found to produce glass substrates with low levels of S-warp. More particularly, the temperature profile of Figure 4 is used in at least the lower temperature portion of the GTTR.

The figure shows both the temperature profile used to reduce S-warp and the corresponding ribbon thickness. The locations of the bead portions and the S-warp portions of the ribbon are also shown in this figure.

As can be seen from this figure, the temperature differences across the S-warp portions are each less than 40°C. In practice, keeping the temperature differences across the S-warp portions of the ribbon at this level or less has been found to result in low levels of S-warp, e.g., levels of 250 microns or less, while still allowing sufficient cooling of the ribbon by the edge rollers to permit the drawing of wide ribbons of glass, e.g., ribbons having a full width of 2,250 millimeters in Figure 4.

Although specific embodiments of the invention have been described and illustrated, it is to be understood that modifications can be made without departing from the invention's scope. For example, although the invention has been discussed above primarily in terms of a fusion downdraw process, it is equally applicable to a float process in which edge rollers are used to cool the edges of the glass ribbon and thus limit the attenuation of the ribbon resulting from drawing with one or more pulling rollers.

A variety of other modifications which do not depart from the scope of the invention will be evident to persons of ordinary skill in the art from the disclosure herein.

## Claims

1. A method for fabricating sheets of glass comprising:
(A) producing a glass ribbon (15) using a drawing process, said ribbon having:
(i) a center line (17),
(ii) a first edge (19a),
(iii) a second edge (19b),
(iv) a first bead portion (21a) which begins at the first edge (19a) and extends inward towards the center line (17), said first bead portion having an inner edge (23a) and a width (W_{B1}),
(v) a second bead portion (21 b) which begins at the second edge (19b) and extends inward towards the center line (17), said second bead portion having an inner edge (23b) and a width (W_{B2}),
(vi) a first S-warp portion (25a) which begins at the inner edge (23a) of the first bead portion (21 a) and extends inward towards the center line (17); and
(vii) a second S-warp portion (25b) which begins at the inner edge (23b) of the second bead portion (21b) and extends inward towards the center line (17), said first and second S-warp portions each having a width Wₛ which equals (W_{B1} + W_{B2})/2;
(B) cutting sheets (13) from the glass ribbon (15); and
(C) trimming the first and second bead portions (21 a, 21 b) from the sheets (13);
wherein:
(i) the glass has a glass transition temperature range (GTTR) in which the glass undergoes a transformation from substantially a visco-elastic material to substantially an elastic material;
(ii) in step (A), the ribbon (15) is cooled from a temperature above the GTTR to a temperature below the GTTR;
(iii) at a location where the center line (17) of the ribbon (15) is at a temperature above the GTTR, the first and second bead portions (21 a, 21b) of the ribbon (15) are contacted by first and second edge rollers (27a, 27b), respectively;
(iv) the contacting of the edge rollers (27a, 27b) with the ribbon locally reduces the temperature of the glass;
the method being **characterized in that**:
(v) at least one location where the center line (17) of the ribbon (15) is at a temperature that is within the GTTR, the first and second bead portions (21a, 21b) and/or the first and second S-warp portions (25a, 25b) of the ribbon (15) are heated, and/or the center portion of the ribbon is cooled, to reduce the temperature differences across the widths Wₛ of the S-warp portions (25a, 25b), and thereby reduce the occurrence of S-warp in the sheets.

2. The method of Claim 1 wherein the heating and/or cooling reduces the temperature differences across the widths of the S-warp portions to less than 40°C.

3. The method of Claim 1 wherein the upper end of the GTTR is less than or equal to 850°C and the lower end of the GTTR is greater than or equal to 650°C.

4. The method of Claim 1 wherein the heating and/or cooling occurs throughout the GTTR.

5. The method of Claim 1 wherein (i) the GTTR has a lower temperature portion whose upper end is less than or equal to 780°C and whose lower end is greater than or equal to 720°C and (ii) the at least one location where the heating and/or cooling occurs includes a location within the lower temperature portion of the GTTR.

6. The method of Claim 1 wherein (i) the GTTR has a lower temperature portion whose upper end is less than or equal to 780°C and whose lower end is greater than or equal to 760°C and (ii) the at least one location where the heating and/or cooling occurs includes a location within the lower temperature portion of the GTTR.

7. The method of Claim 6 wherein the heating and/or cooling reduces the temperature differences across the widths of the S-warp portions to less than 40°C.

8. The method of Claim 1 wherein the temperature differences across the widths of the S-warp portions (25a, 25b) are primarily reduced by heating the first and second bead portions (21 a, 21 b) and the first and second S-warp portions (25a, 25b).

9. The method of Claim 1 wherein the edge rollers (27a, 27b) are air cooled.

10. The method of Claim 1 wherein the sheets have a nominal level of S-warp of less than 250 microns.

## Patentansprüche

1. Verfahren zur Herstellung von Glasscheiben, das Folgendes beinhaltet:
(A) Erzeugen eines Glasbandes (15) mit einem Ziehverfahren, wobei das genannte Band Folgendes aufweist:
(i) eine Mittellinie (17),
(ii) einen ersten Rand (19a),
(iii) einen zweiten Rand (19b),
(iv) einen ersten Wulstabschnitt (21a), der am ersten Rand (19a) beginnt und einwärts in Richtung Mittellinie (17) verläuft, wobei der genannte erste Wulstabschnitt einen inneren Rand (23a) und eine Breite (W_{B1}) hat,
(v) einen zweiten Wulstabschnitt (21b), der am zweiten Rand (19b) beginnt und einwärts in Richtung Mittellinie (17) verläuft, wobei der genannte zweite Wulstabschnitt einen inneren Rand (23b) und eine Breite (W_{B2}) aufweiset,
(vi) einen ersten S-Warp-Abschnitt (25a), der am inneren Rand (23a) des ersten Wulstabschnitts (21a) beginnt und einwärts in Richtung Mittellinie (17) verläuft; und
(vii) einen zweiten S-Warp-Abschnitt (25b), der am inneren Rand (23b) des zweiten Wulstabschnitts (21b) beginnt und einwärts in Richtung Mittellinie (17) verläuft, wobei der genannte erste und zweite S-Warp-Abschnitt jeweils eine Breite Wₛ haben, die gleich (W_{B1} + **W_{B2})/2** ist;
(B) Abschneiden von Scheiben (13) von dem Glasband (15); und
(C) Trimmen des ersten und zweiten Wulstabschnitts (21a, 21b) von den Scheiben (13);
wobei:
(i) das Glas einen Glasübergangstemperaturbereich (GTTR) hat, in dem das Glas von einem im Wesentlichen viskoelastischen Material in ein im Wesentlichen elastisches Material übergeht;
(ii) das Band (15) in Schritt (A) von einer Temperatur über dem GTTR auf eine Temperatur unter dem GTTR gekühlt wird;
(iii) Inkontaktbringen an einem Ort, an dem die Mittellinie (17) des Bandes (15) auf einer Temperatur über dem GTTR ist, des ersten und zweiten Wulstabschnitts (21a, 21b) des Bandes (15) jeweils mit einer ersten und einer zweiten Randwalze (27a, 27b);
(iv) wobei durch den Kontakt der Randwalzen (27a, 27b) mit dem Band die Temperatur des Glases lokal reduziert wird;
wobei das Verfahren **dadurch gekennzeichnet ist, dass**:
(v) wenigstens ein Ort, an dem die Mittellinie (17) des Bandes (15) auf einer Temperatur ist, die unterhalb des GTTR ist, der erste und zweite Wulstabschnitt (21a, 21b) und/oder der erste und zweite S-Warp-Abschnitt (25a, 25b) des Bandes (15) erhitzt werden, und/oder der mittlere Abschnitt des Bandes gekühlt wird, um die Temperaturunterschiede über die Breiten Wₛ der S-Warp-Abschnitte (25a, 25b) zu reduzieren und dadurch das Auftreten von S-Warp in den Scheiben zu reduzieren.

2. Verfahren nach Anspruch 1, wobei durch das Erhitzen und/oder Kühlen die Temperaturunterschiede über die Breiten der S-Warp-Abschnitte auf weniger als 40°C reduziert werden.

3. Verfahren nach Anspruch 1, wobei das obere Ende des GTTR gleich oder kleiner als 850°C und das untere Ende des GTTR gleich oder größer als 650°C ist.

4. Verfahren nach Anspruch 1, wobei das Erhitzen und/oder Kühlen über den gesamten GTTR erfolgt.

5. Verfahren nach Anspruch 1, wobei (i) der GTTR einen unteren Temperaturabschnitt hat, dessen oberes Ende gleich oder kleiner als 780°C und dessen unteres Ende gleich oder höher als 720°C ist, und (ii) der wenigstens eine Ort, an dem das Erhitzen und/oder Kühlen auftritt, einen Ort innerhalb des unteren Temperaturabschnitts des GTTR beinhaltet.

6. Verfahren nach Anspruch 1, wobei (i) der GTTR einen unteren Temperaturabschnitt hat, dessen oberes Ende gleich oder kleiner als 780°C und dessen unteres Ende gleich oder kleiner als 760°C ist, und (ii) der wenigstens eine Ort, an dem das Erhitzen und/oder Kühlen erfolgt, einen Ort innerhalb des unteren Temperaturabschnitts des GTTR beinhaltet.

7. Verfahren nach Anspruch 6, wobei durch das Erhitzen und/oder Kühlen die Temperaturunterschiede über die Breiten der S-Warp-Abschnitte auf weniger als 40°C reduziert werden.

8. Verfahren nach Anspruch 1, wobei die Temperaturunterschiede über die Breiten der S-Warp-Abschnitte (25a, 25b) vornehmlich durch Erhitzen des ersten und zweiten Wulstabschnitts (21a, 21b) und des ersten und zweiten S-Warp-Abschnitts (25a, 25b) reduziert werden.

9. Verfahren nach Anspruch 1, wobei die Randwalzen (27a, 27b) luftgekühlt sind.

10. Verfahren nach Anspruch 1, wobei die Scheiben ein S-Warp-Nennniveau von weniger als 250 Mikron haben.

## Revendications

1. Procédé de fabrication de feuilles de verre comprenant les étapes consistant à :
(A) produire un ruban de verre (15) en utilisant un processus d'étirage, ledit ruban ayant :
(i) un axe longitudinal (17),
(ii) un premier bord (19a),
(iii) un deuxième bord (19b),
(iv) une première partie formant cordon (21a) qui commence au premier bord (19a) et se prolonge vers l'intérieur en direction de l'axe longitudinal (17), ladite première partie formant cordon ayant un bord intérieur (23a) et une largeur (W_{B1}),
(v) une deuxième partie formant cordon (21b) qui commence au deuxième bord (19b) et se prolonge vers l'intérieur en direction de l'axe longitudinal (17), ladite deuxième partie formant cordon ayant un bord intérieur (23b) et une largeur (W_{B2}) ,
(vi) une première partie S-warp (25a) qui commence au bord intérieur (23a) de la première partie formant cordon (21a) et se prolonge vers l'intérieur en direction de l'axe longitudinal (17) ; et
(vii) une deuxième partie S-warp (25b) qui commence au bord intérieur (23b) de la deuxième partie formant cordon (21b) et se prolonge vers l'intérieur en direction de l'axe longitudinal (17), lesdites première et deuxième parties S-warp ayant chacune une largeur Wₛ qui est égale à (W_{B1} + W_{B2})/2 ;
(B) couper des feuilles (13) dans le ruban de verre (15) ;
et
(C) découper les première et deuxième parties formant cordon (21a, 21b) des feuilles (13) ;
dans lequel :
(i) le verre a une plage de température de transition vitreuse (GTTR) dans laquelle le verre subit une transformation d'un matériau essentiellement viscoélastique à un matériau essentiellement élastique ;
(ii) à l'étape (A), le ruban (15) est refroidi d'une température supérieure à la GTTR à une température inférieure à la GTTR ;
(iii) à un emplacement où l'axe longitudinal (17) du ruban (15) est à une température supérieure à la GTTR, les première et deuxième parties formant cordon (21a, 21b) du ruban (15) sont contactées par des premier et deuxième galets de bordure (27a, 27b), respectivement ;
(iv) l'entrée en contact des galets de bordure (27a, 27b) avec le ruban réduit localement la température du verre ;
le procédé étant **caractérisé en ce que** :
(v) à au moins un emplacement où l'axe longitudinal (17) du ruban (15) est à une température qui est dans la GTTR, les première et deuxième parties formant cordon (21a, 21b) et/ou les première et deuxième parties S-warp (25a, 25b) du ruban (15) sont chauffées, et/ou la partie centrale du ruban est refroidie, pour réduire les différences de température à travers les largeurs Wₛ des parties S-warp (25a, 25b), ce qui réduit ainsi l'occurrence de déformation S-warp dans les feuilles.

2. Procédé selon la revendication 1, dans lequel le chauffage et/ou le refroidissement réduisent les différences de température à travers la largeur des parties S-warp à moins de 40°C.

3. Procédé selon la revendication 1, dans lequel l'extrémité supérieure de la GTTR est inférieure ou égale à 850°C, et l'extrémité inférieure de la GTTR est supérieure ou égale à 650°C.

4. Procédé selon la revendication 1, dans lequel le chauffage et/ou le refroidissement se produisent dans toute la GTTR.

5. Procédé selon la revendication 1, dans lequel (i) la GTTR a une partie de température inférieure dont l'extrémité supérieure est inférieure ou égale à 780°C et dont l'extrémité inférieure est supérieure ou égale à 720°C et (ii) le ou les emplacements où se produisent le chauffage et/ou le refroidissement comprennent un emplacement dans la partie de température inférieure de la GTTR.

6. Procédé selon la revendication 1, dans lequel (i) la GTTR a une partie de température inférieure dont l'extrémité supérieure est inférieure ou égale à 780°C et dont l'extrémité inférieure est supérieure ou égale à 760°C et (ii) le ou les emplacements où ont lieu le chauffage et/ou le refroidissement comprennent un emplacement dans la partie de température inférieure de la GTTR.

7. Procédé selon la revendication 6, dans lequel le chauffage et/ou le refroidissement réduisent les différences de température à travers les largeurs des parties S-warp à moins de 40°C.

8. Procédé selon la revendication 1, dans lequel les différences de température à travers les largeurs des parties S-warp (25a, 25b) sont principalement réduites par chauffage des première et deuxième parties formant cordon (21a, 21b) et des première et deuxième parties S-warp (25a, 25b).

9. Procédé selon la revendication 1, dans lequel les galets de bordures (27a, 27b) sont refroidis par air.

10. Procédé selon la revendication 1, dans lequel les feuilles ont un niveau nominal de S-warp inférieur à 250 microns.
